# DEMANDE DE BREVET EUROPEEN

(11) **EP 3 878 925 A1**
(43) Date de publication de la demande: **15.09.2021**
(21) Numéro de dépôt: 20162650.4
(22) Date de dépôt: 12.03.2020
(51) Int. Cl.: C10B 53/02

(54) **PROCÉDÉ D'OBTENTION DE BIOHUILES PAR PYROLYSE DE RAMEAUX D'OLIVIER**

(71) Demandeur: Centre National de la Recherche Scientifique, 75016 Paris (FR); Universite Sorbonne Paris Nord - Paris 13, 93430 Villetaneuse (FR)
(72) Inventeur: DICKO, Moussa, 93430 Saint-Denis (FR)
(74) Mandataire: Demulsant, Xavier

(57) **Abrégé**

Procédé de production de bio-huile par pyrolyse de rameaux d'olivier, le procédé comprenant les étapes suivantes : broyage des rameaux pour former un broyat ; séchage du broyat pour former un broyat sec ; introduction du broyat sec dans un four de pyrolyse ; chauffage du broyat sec à une température comprise entre 400°C et 600° pendant une durée comprise entre 10 minutes et 15 minutes, dans un réacteur sensiblement hermétique, le broyat sec étant entraîné dans le réacteur par une vis de transfert et de chauffe ; extraction du gaz et refroidissement du gaz par condensation, pour former une biohuile ; stockage de la biohuile à une température de l'ordre de quelques degrés Celsius, la biohuile se fractionnant en une phase goudronneuse et une phase aqueuse ; séparation de la phase aqueuse. Dispositif pour la mise en œuvre du procédé.

## Description

L'invention a trait à l'obtention de produits chimiques biosourcés, et plus particulièrement à la production de biohuiles à partir de biomasse lignocellulosique.

La biomasse lignocellulosique est composée principalement de lignine, d'hémicellulose, et de cellulose. La biomasse lignocellulosique contient aussi, en faibles proportions, des extractibles organiques comme les monomères de sucres (glucose, fructose), et des acides aliphatiques. L'invention concerne plus particulièrement la production de biohuiles à partir de rameaux d'olivier, par pyrolyse.

L'olivier est présent sur tous les continents et l'on estime que le verger oléicole mondial comprend environ 1.5 milliard d'arbres, répartis sur une surface de 11 millions d'hectares.

La production d'huile d'olive est principalement réalisée dans les pays du pourtour méditerranéen : Espagne, Italie, Grèce, Turquie, Tunisie, Maroc.

La production française d'huile d'olive aurait été en 2017 de cinq mille tonnes, assurée par vingt mille producteurs, exploitant environ cinq millions d'arbres.

Selon le Conseil Oléicole International, la production mondiale d'huile d'olive aurait été en 2018 de 3,3 millions de tonnes, dont 1.2 millions de tonnes pour l'Espagne.

La taille des oliviers est considérée comme augmentant la qualité de la fructification, et réduisant les risques de maladie. Plusieurs tailles sont effectuées sur chaque arbre. La taille de formation des oliviers est effectuée à la plantation. Une taille d'entretien est effectuée tous les ans, typiquement de février à avril. Une taille de fructification doit être effectuée tous les deux à trois ans.

Il est estimé que la taille d'un seul olivier conduit à plusieurs dizaines de kilogrammes de rameaux par an, soit environ six tonnes de résidus de taille par hectare d'oliveraie.

Malgré cette masse considérable, à ce jour, aucune utilisation industrielle de ces résidus de taille n'a été largement développée.

Un grand nombre de problèmes techniques sont en effet à résoudre.

Il est à noter tout d'abord que les rameaux d'olivier sont des résidus très différents des sous-produits connus de l'industrie oléicole (margines, grignons) pour lesquels des procédés de valorisation existent.

Ces différences sont telles qu'il n'est pas possible de transposer aux rameaux et résidus de taille les procédés de valorisation connus pour les sous-produits tels que les margines, les noyaux ou les grignons. Une première différence entre les rameaux d'olivier et les sous-produits de l'industrie oléicole réside dans leur nature physique.

Les rameaux sont des produits solides, sensiblement secs, de faible densité, comprenant des branches.

Les margines sont des résidus liquides, contenant environ 83% d'eau.

Les grignons sont un sous-produit solide issu le plus souvent de la centrifugation horizontale des fruits après leur lavage, broyage et malaxage. Le grignon brut, résidu de la première extraction de l'huile par pression de l'olive entière, a une teneur élevée en eau, de l'ordre de 25à 30%, et en huile. Les grignons épuisés ou dégraissés ont subi une extraction chimique par solvant ou une extraction mécanique et contiennent des noyaux qui peuvent être séparés et un peu d'huile.

Il n'est pas rare que du sel soit ajouté aux olives pour leur conservation, sel se retrouvant dans les margines et les grignons.

Une deuxième différence entre les rameaux d'olivier et les sous-produits d'huileries réside dans les masses qu'ils représentent.

La production mondiale de grignons bruts est estimée à 2.9 millions de tonnes.

Il est estimé qu'en moyenne 1 kg d'olive traité produit 1 litre de margine, de sorte que la production mondiale de margines serait de 8.4 millions de mètres cubes.

Par comparaison, il est estimé que 25kg de feuilles et brindilles sont produites par an et par arbre, soit une masse d'environ 15 millions de tonnes de feuilles et brindilles fraiches. La masse des rameaux, incluant les branches est encore plus importante.

Une troisième différence entre les rameaux d'olivier et les sous-produits de l'industrie oléicole réside dans les aspects économiques et pratiques de leur valorisation.

Les produits de la taille sont à ce jour non utilisés ou utilisés éventuellement comme combustibles. La valeur calorifique du bois d'olivier est modeste, de l'ordre de 3600 kcal/kg. A titre de comparaison, il est estimé qu'un bois sec de feuillu présente une valeur calorifique de l'ordre de 4300 kcal/kg. Le cas échéant, les feuilles d'olivier et ramilles, de diamètre inférieur à 3 cm, sont séparées des branches et distribuées aux ruminants.

Les grignons sont utilisés dans l'alimentation animale. Leur utilisation comme combustible pose de nombreux problèmes, en particulier l'émission d'odeurs et de fumées. La valeur calorifique des grignons est moyenne, de l'ordre de 2950 kcal/kg.

Les margines sont traitées par évaporation naturelle, séparation par gravité, distillation, compostage, ou lagunage. Leur incinération est très couteuse, et extrêmement gourmande en énergie. Il a également été proposé d'imprégner de la sciure de bois avec des margines, pour former une pâte soumise à pyrolyse permettant la fabrication de biochars utilisés comme fertilisant pour les oliveraies, sous l'appellation Fertichar.

Une quatrième différence entre les rameaux d'olivier et les sous-produits de l'industrie oléicole résulte de leur lieu d'obtention.

Les sous-produits de l'industrie oléicole sont issus du pressage ou de la centrifugation, à l'huilerie.

Les rameaux sont issus de la taille effectuée et sont dispersés en tas dans les oliveraies.

Le plus souvent, les rameaux sont laissés sur place, pour être brulés ultérieurement. Les oléiculteurs sont fortement incités à laisser les rameaux sur place pour les bruler, pour plusieurs raisons.

En premier lieu, il est fréquent que les oliveraies soient situées sur des terrains en pente, dans des régions de moyenne montagne, avec les difficultés de circulation qui en résultent.

En deuxième lieu, les rameaux sont des produits de faible densité, dont le transport est vu comme onéreux, au regard d'une valorisation de faible intérêt.

En troisième lieu, le feu est une mesure traditionnelle utilisée de manière coutumière pour éliminer les rameaux dans les oliveraies. Le risque d'incendie est vu comme faible, la plantation d'oliviers comme pare-feu étant fréquente dans le pourtour méditerranéen.

En quatrième lieu, le feu est vu comme le seul moyen de lutte contre certaines maladies de l'olivier, en particulier l'infection due à la bactérie Xylella fastidiosa, bactérie phyto-pathogène, responsable du complexe de dessèchement rapide de l'olivier (CoDiRO) apparu en Italie en 2013. Au terme d'une recherche approfondie publiée en mars 2019, l'EFSA indique qu'aucun moyen curatif n'existe à ce jour contre cette bactérie.

Les oléiculteurs sont également incités à bruler les rameaux sur place dans la mesure où les rameaux, bruts ou broyés, peuvent servir de supports à divers champignons pathogènes.

La pratique traditionnelle et très fortement ancrée du brulage des rameaux et résidus de taille des oliviers est à l'origine d'un dégagement important de gaz à effet de serre.

L'invention vise à fournir des débouchés industriels à cette biomasse, par production de biohuiles, à partir de rameaux d'olivier, par pyrolyse. Les traitements par pyrolyse peuvent être classés en trois catégories (Khodier, Automotive shredder residue for clean energy systems to produce sustainable green energy, mars 2019) :
(a) les traitements par pyrolyse lente, pour lesquels la température de traitement étant comprise entre 300°C et 700°C, la vitesse de chauffe étant comprise entre 0.1 et 1°C par seconde, et le temps de traitement étant compris entre 600 et 6000 secondes. La proportion massique des produits obtenus par pyrolyse conventionnelle est typiquement la suivante : biochar 35%, biogaz 35%, biohuile 30% ;
(b) les traitements par pyrolyse rapide, la température de traitement étant comprise entre 450°C et 550°C, la vitesse de chauffe étant comprise entre 10 et 200°C par seconde, et le temps de traitement étant compris entre 0.5 et 5 secondes. La proportion massique des produits obtenus par pyrolyse rapide est typiquement la suivante : biochar 20%, biogaz 30%, biohuile 50% ;
(c) les traitements par pyrolyse flash, la température de traitement étant comprise entre 800°C et 1000°C, la vitesse de chauffe étant supérieure à 1000°C par seconde, et le temps de traitement étant inférieur à 0.5 secondes. La proportion massique des produits obtenus par pyrolyse flash est typiquement la suivante : biochar 12%, biogaz 13%, biohuile 75%.

Les procédés de pyrolyse flash mettent couramment en œuvre des réacteurs à lit fluidisé circulant ou des réacteurs à cône rotatif, ou bien des réacteurs à flux entrainé ou des réacteurs cyclones.

La production de bio-huiles par pyrolyse de sous-produits d'huilerie a été décrite à l'échelle du laboratoire, pour les margines, les grignons et noyaux, obtenus à l'huilerie, ainsi que pour les feuilles qui sont souvent amenées à l'huilerie en même temps que les fruits.

Dans le cadre du programme pluridisciplinaire Olizero, l'inventeur a décrit en 2016 les résultats d'une pyrolyse réalisée en laboratoire sur des feuilles d'olivier : une masse de 0.5 mg de feuilles d'olivier a été traitée par pyrolyse dans un appareillage de laboratoire (Pyrolyzer PY3030, Frontier Lab) couplé à un chromatographe et un spectromètre de masse (Dicko et al, Biomolecules from olive pruning waste in Sierra Magina, 4th International Conférence on Sustainable Solid Waste Management, Juin 2016).

La poursuite des travaux de ce programme interdisciplinaire Olizero a conduit à la proposition d'une valorisation en deux étapes, pour les feuilles d'olivier : une extraction chimique par solvant (Soxhlet) suivi d'une pyrolyse, l'extraction chimique étant avantageusement précédée d'une attaque fongique (Cohen et al, Journal of Environmental Management 216, 204-2013, 2018). Les travaux présentés en 2018 s'appuient sur les résultats d'une pyrolyse réalisée en laboratoire sur des feuilles d'olivier : une masse de 0.5 mg de feuilles d'olivier a été traitée par pyrolyse dans un appareillage de laboratoire (Pyrolyzer PY3030, Frontier Lab) couplé à un chromatographe et un spectromètre de masse.

Sangines et al. (Slow pyrolysis of olive stones in a rotary kiln, chemical and energy characterization of solid, gas and condensable products, Journal of renewable and sustainable energy 7, 2015*)* décrivent la pyrolyse de grignons dans un four rotatif, de laboratoire, en quartz, d'une capacité de 100 grammes. La température d'essai est comprise entre 150°C et 900°C pour un temps de réaction de 15 minutes.

Christoforou et al. (Comparative study on catalytic and non-catalytic pyrolysis of olive mill solid wastes, Waste and biomass valorization, 2017) décrivent une pyrolyse de grignons dans un four de laboratoire, d'une capacité de traitement de 1kg par heure, la durée de pyrolyse étant de 90 minutes.

Bartocci et al. (Pyrolysis of olive stone for energy purposes, Energy Procedia 82, 374-380, 2015) décrivent une pyrolyse de grignons, une masse de 100 grammes de grignons étant placée pendant 30 minutes dans un réacteur de laboratoire, à une température de 600°C.

La pyrolyse de rameaux d'olivier et résidus de taille d'olivier a par ailleurs été décrite, à l'échelle du laboratoire.

Figueiredo (Pryolysis of olive wood, Biological wastes 28, 217-225, 1989) décrit la composition des biochars et biogaz obtenus lors de la pyrolyse, en laboratoire, d'une masse de 150 mg de bois d'olivier, la température de traitement étant comprise entre 300°C et 900°C, la vitesse de chauffe étant de 10°C par minute et le temps de traitement de 97 minutes.

Zabaniotou et al. (Olive residues cuttings and kernels rapid pyrolysis produit yields and kinetics, Biomass and bioenergy 18, 411-420, 2000) décrivent le pyrolyse de résidus de taille d'oliviers et de grignons à une température comprise entre 270°C et 600°C pendant une durée de 0.5 à 1 seconde, dans un réacteur de laboratoire, 200mg de produit étant traités par pyrolyse.

Aitziber (Optimization of the pyrolysis process for the production of a biomass derived reducing agent and hydrogen-rich gases, 2014) décrit une pyrolyse de rameaux d'oliviers dans un four de laboratoire, d'une capacité de 100 grammes. La température de pyrolyse est de 750°C et la durée de traitement est de 30 minutes.

Zamora et al. (Fuel 202, 109-117, 2017) décrivent le traitement de résidus de taille d'oliviers à une température comprise entre 200°C et 300°C sous azote, la durée du traitement étant comprise entre 10 minutes et 60 minutes, dans un réacteur de laboratoire, une masse de 5 grammes de résidus de taille étant traitée.

EP 1870171 (Ferca) mentionne la pyrolyse de grignons bruts et de grignons déshuilés. La température de pyrolyse est comprise entre 450°C et 650°C et la durée de pyrolyse est comprise entre 30 minutes (lorsque la température est de 450°C) et 20 minutes (lorsque la température est de 650°C). Aucune information n'est donnée quant à la structure du réacteur de pyrolyse. La bio-huile obtenue est soumise à une transestérification pour la production de biodiésel.

Gomez et al. (Journal of Cleaner Production 120, 181-190, 2016) décrivent la pyrolyse de rameaux d'olivier, dans une installation pilote. La température de pyrolyse est de 350°C, 450°C ou 550°C. Le temps de traitement est de 15 minutes. Une masse de 10 kg de rameaux est traitée dans un four électrique, les rameaux étant introduits tels que livrés : la longueur des rameaux est comprise entre 30 et 70 mm, et leur diamètre est compris entre 2 mm et 20 mm. Le four comporte trois zones successives à température différentes et indépendantes.

Le procédé décrit par *Gomez et al.* présente de nombreux inconvénients.

Un premier inconvénient est que les rameaux sont introduits tels que dans le four, sans aucune préparation. La variabilité de forme et dimensions des rameaux ne permet pas d'assurer une alimentation stable du four et donc un fonctionnement stable du procédé. Les rameaux peuvent par ailleurs être plus ou moins humides, l'eau entrant avec les rameaux dans le four se retrouvant dans la biohuile produite, dont les composants se trouvent ainsi dilués.

Un deuxième inconvénient est que le procédé ne fonctionne pas en continu. Il en résulte de fortes variations dans le fonctionnement du four.

Un troisième inconvénient est que le four de pyrolyse décrit par *Gomez et al.* est un four électrique. La chauffe des rameaux est ainsi obtenue par rayonnement. Il en résulte des pertes énergétiques élevées. L'inventeur s'est attaché à proposer un procédé et un dispositif ne présentant pas les inconvénients de l'art antérieur et permettant la production en continu de bio-huile, à partir de rameaux d'olivier et résidus de taille d'oliviers, par pyrolyse.

A ces fins, la présente invention se rapporte, selon un premier aspect, à un procédé de production de bio-huile par pyrolyse de rameaux d'olivier, le procédé comprenant les étapes suivantes :
- broyage des rameaux d'olivier, pour former un broyat ;
- séchage du broyat pour former un broyat sec ;
- introduction du broyat sec dans une trémie d'alimentation d'un four de pyrolyse ;
- chauffage du broyat sec à une température comprise entre 400°C et 600° pendant une durée comprise entre 10 minutes et 15 minutes, dans un réacteur sensiblement hermétique, le broyat sec étant entraîné en continu dans le réacteur par une vis de transfert et de chauffe, la vis étant rotative suivant un axe de rotation longitudinal, et chauffée;
- extraction du gaz et refroidissement du gaz par condensation, pour former une biohuile ;
- stockage de la bio-huile à une température de l'ordre de quelques degrés Celsius, la bio-huile se fractionnant en une phase goudronneuse et une phase aqueuse ;
- séparation de la phase aqueuse.

La présente invention permet le fractionnement de la biohuile avec obtention d'une phase goudronneuse riche en phénol, en naphtalène et leurs dérivés et d'une phase aqueuse riche en acide acétique, acétol, formaldéhyde, furfural, 2,3 butanedione..

L'acétol (hydroxyacétone, CAS 116-09-6) obtenu dans la phase aqueuse peut être utilisé comme agent brunissant dans l'industrie agroalimentaire, ou l'industrie textile, ou comme arôme par exemple en boulangerie, ou bien encore comme agent autobronzant en cosmétique. L'acétol peut être utilisé comme intermédiaire chimique, par exemple pour la production de propylène glycol.

La phase goudronneuse peut être valorisée dans la production de polymères biosourcés (résines, mousses, polyuréthane, remplacement du bisphénol A pour la fabrication d'époxy). Les phénoliques contenus dans la phase goudronneuse peuvent être avantageusement employés comme précurseurs de polymérisation.

En variante ou en combinaison, au moins une partie de la phase goudronneuse est valorisée pour la production d'énergie.

En variante ou en combinaison, au moins une partie de la biohuile est valorisée comme matière première à l'élaboration de biocarburant.

La séparation en une phase aqueuse et une phase goudronneuse est avantageusement obtenue sans solvant.

Pour éviter la dégradation des composants contenus dans la biohuile, son stockage est avantageusement effectué dans des contenants opaques, par exemple en verre teinté.

Dans une variante avantageuse, une partie de l'eau contenue dans la fraction aqueuse est extraite avant stockage de cette fraction aqueuse. Le biochar obtenu par le procédé peut avantageusement être employé pour l'amendement des sols, ou être activé, par exemple par plasma, pour effectuer des adsorptions, utilisé pour une dépollution, une séparation de gaz, ou en catalyse.

Le biochar pourrait en variante être au moins en partie combiné avec des biopolymères pour former des fertilisants à relargage contrôlé.

En variante, au moins une partie du biochar peut être valorisé comme substitut au noir de carbone.

La phase gazeuse non condensable obtenue par le procédé peut avantageusement être valorisée par combustion, les fumées chaudes obtenues lors de cette combustion étant introduites dans un circuit d'échangeur ou dans un procédé de valorisation thermique après épuration, par exemple dans une turbine à gaz.

Le procédé selon la présente invention est ainsi avantageusement mis en œuvre dans une installation de bioraffinerie, produisant des biohuiles, ainsi que des biochars, du biogaz, et de l'énergie, les composés contenus dans la phase aqueuse et/ou la phase goudronneuse des biohuiles étant séparés.

L'entraînement du broyat par une vis de transport et de chauffe distingue le procédé des méthodes antérieures dans lesquelles la biomasse est chauffée par rayonnement actif en provenance des parois d'un four. De préférence, les parois internes du réacteur sont pourvues d'un revêtement en réfractaire.

Bien que le procédé selon la présente invention vise la production de biohuile par pyrolyse, il est totalement distinct des procédés de pyrolyse flash de biomasses lignocellulosique connus comme performants pour la production de biohuiles.

Le procédé selon l'invention est également très différent des procédés de pyrolyse rapide à basse température de biomasse lignocellulosique, pourtant très utilisés pour la production de bio-huiles.

Les temps de traitement mis en œuvre dans le procédé selon la présente invention sont proches de ceux mis en œuvre dans les procédés de pyrolyse lente, pourtant connus comme très peu performants pour la production de biohuiles.

Avantageusement, le broyage des rameaux est réalisé pour former un broyat de granulométrie inférieure à 20 mm.

Avantageusement, le séchage du broyat est effectué pour former un broyat sec, présentant une humidité relative inférieure à 20 %. Avantageusement, l'introduction du broyat sec dans le four de pyrolyse est effectuée à débit constant et régulé.

Avantageusement, l'introduction du broyat sec dans le four de pyrolyse est effectuée avec un taux d'alimentation en broyat sec supérieur à 4 kg par heure. Dans une mise en œuvre, le taux d'alimentation en broyat sec est d'environ 7.5 m³/h, permettant une capacité de traitement de l'ordre de 10 000 tonnes par an.

Dans certaines mises en œuvre avantageuses, l'étape de chauffage du broyat sec est réalisée à une température de 400°C pendant une durée de 10 minutes ou à une température de 500°C pendant une durée de 10 minutes.

Dans d'autres mises en œuvre avantageuses, l'étape de chauffage du broyat sec est réalisée à une température de 500°C pendant une durée de 15 minutes ou à une température de 600°C pendant une durée de 10 minutes.

Avantageusement, la vis présente une température contrôlée le long de son axe de rotation.

L'invention se rapporte, selon un autre aspect, à une biohuile obtenue selon un procédé tel que présenté ci-dessus, biohuile dans laquelle la phase goudronneuse comprend notamment du phénol, du naphtalène, et leurs dérives, la phase aqueuse comprenant notamment de l'acide acétique, de l'acétol, du formaldéhyde, du furfural, du 2,3 butanedione. L'invention se rapporte également à un dispositif de production de bio-huile par pyrolyse de rameaux d'olivier, le dispositif comprenant :
- des moyens de broyage des rameaux, pour former un broyat ;
- des moyens de séchage du broyât, pour former un broyat sec ;
- des moyens d'introduction du broyat sec, dans un four de pyrolyse, par exemple dans une trémie d'alimentation ;
- un réacteur et des moyens de chauffage du broyat sec à une température comprise entre 400°C et 600° pendant une durée comprise entre 10 minutes et 15 minutes, dans un réacteur sensiblement hermétique, le broyat sec étant entraîné en continu dans le réacteur par une vis de transfert et de chauffe, la vis étant rotative suivant un axe de rotation longitudinal, la vis étant chauffée;
- des moyens d'extraction du gaz et refroidissement du gaz par condensation, pour former une biohuile ;
- des moyens de stockage de la biohuile à une température de l'ordre de quelques degrés Celsius, la biohuile se fractionnant en deux phases : une phase goudronneuse et une phase aqueuse ;
- des moyens de séparation de la phase aqueuse. Avantageusement, la phase goudronneuse comprend notamment du phénol, du naphtalène, et leurs dérives, la phase aqueuse comprenant notamment de l'acide acétique, de l'acétol, du formaldéhyde, du furfural, du 2,3 butanedione.

Avantageusement, les moyens de séchage du broyat sont alimentés en énergie par biohuile, ou par un carburant issu de biohuile, ou par la chaleur produite lors de la combustion de gaz produits lors de la pyrolyse.

Avantageusement, l'axe de la vis présente une température contrôlée le long de son axe de rotation.

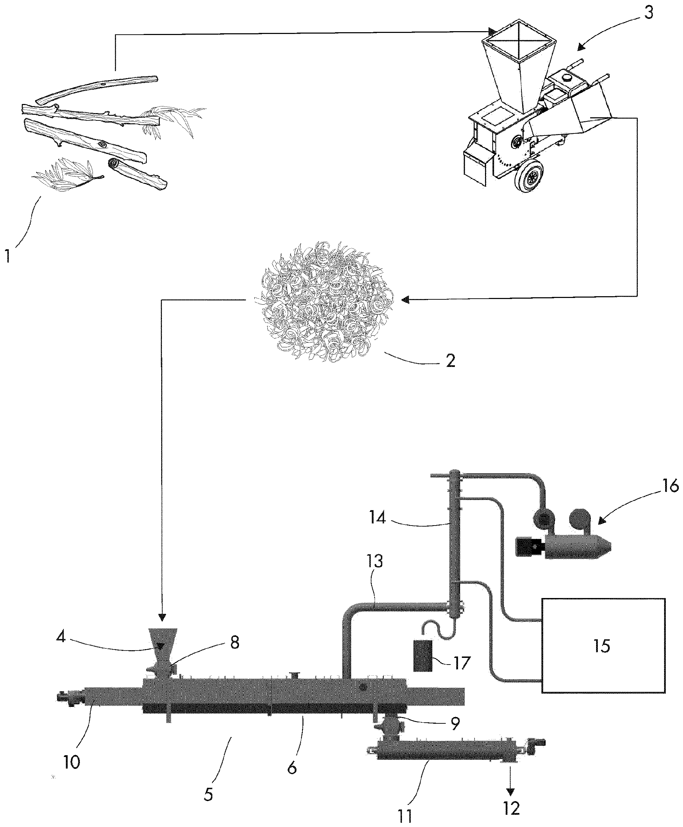

D'autres objets et avantages de l'invention apparaîtront à la lumière de la description d'un mode de réalisation, faite ci-après en référence à la figure unique annexée qui est une représentation schématique du procédé.

Dans une première étape, les rameaux 1 d'olivier sont broyés, pour former un broyat 2.

Le broyage peut être effectué par différents moyens de broyage 3. Dans certaines mises en œuvre, au moins une partie du broyat est obtenu par l'emploi d'un broyeur mobile.

Il est ainsi avantageusement possible de broyer les rameaux sur le lieu de la taille des oliviers, le transport du broyat étant nettement moins onéreux que le transport des rameaux bruts.

Le broyeur peut être à lame, à turbine, à rotor double lame, à tambour, à disque ou à vis. Avantageusement, pour des oliveraies de petite surface, le broyeur est à moteur thermique d'une puissance de l'ordre de 7 à 15 chevaux (5000 W à 11000 W), alimenté par un biocarburant ou une biohuile, en particulier issu du traitement des rameaux d'olivier. Le broyeur peut être pourvu de brancards pour son déplacement manuel. Un exemple d'un tel broyeur mobile est commercialisé par la société Caravaggi sous la référence Bio100.

Pour des oliveraies de grande surface, le broyeur est avantageusement remorquable. Un exemple de broyeur remorquable à grande capacité est commercialisé par la société Komptech sous l'appellation Axtor 8012, permettant le broyage de 250 m³ de bois sec par heure.

Le broyat 2 obtenu présente avantageusement une granulométrie inférieure à 20 mm. En d'autres termes, la taille des éléments composant le broyat ne dépasse avantageusement pas 20 mm.

Dans des mises en œuvre avantageuses, la taille des éléments composant le broyat est inférieure à 5 mm. Cette disposition facilite le transit du broyat lors de sa pyrolyse.

La densité apparente du granulat formé est avantageusement de l'ordre de 200.

Le broyat 2 est avantageusement séché.

Dans une mise en œuvre, le séchage est effectué à l'air libre, par exemple au sol.

Dans d'autres mises en œuvre, le séchage est effectué par rayonnement, convection ou conduction, ou une combinaison de ces moyens, avec apport d'énergie, la source d'énergie alimentant les moyens de séchage étant avantageusement un biocarburant, en particulier un biocarburant issu de biohuiles.

Dans une mise en œuvre, le séchage du broyat est assuré par la chaleur produite lors de la combustion des gaz de pyrolyse non condensables.

Le séchage peut être effectué à l'oliveraie, dans un bâtiment dédié, ou à l'huilerie.

Le séchage réduit le taux d'humidité du broyât, de sorte à former un broyat sec.

Avantageusement, l'humidité relative du broyat sec est inférieure à 20% et par exemple de l'ordre de 10%.

Le broyat sec est placé dans une trémie d'alimentation 4, à température ambiante.

Cette trémie d'alimentation 4 est placée en entrée d'un dispositif de pyrolyse 5.

Le dispositif de pyrolyse 5 peut être situé à l'oliveraie, cette disposition étant avantageuse lorsque l'exploitation oléicole s'étend sur un vaste territoire et comprend plusieurs grandes oliveraies placées à grande distance les unes des autres. L'exploitation oléicole utilise alors plusieurs dispositifs de pyrolyse, limitant les transports de rameaux ou de broyât.

Dans d'autres mises en œuvre, le dispositif de pyrolyse 5 est placé à l'huilerie. Cette disposition permet le mélange des feuilles et brindilles issues de la récolte avec le broyat sec.

Dans d'autres mises en œuvre, non représentées, le broyage et/ou le séchage des rameaux est effectué par un ensemble placé directement en amont du dispositif de pyrolyse 5. Cette disposition est avantageuse lorsque le dispositif de pyrolyse 5 est situé à proximité de l'oliveraie, le transport des rameaux pouvant être effectué rapidement et à cout acceptable. Cette disposition est également avantageuse lorsque le dispositif de pyrolyse 5 est situé à l'huilerie, les feuilles et brindilles issus de la récolte des fruits pouvant alors être mélangés au rameaux, en amont du broyeur ou dans la trémie 4.

L'alimentation du dispositif de pyrolyse 5 en broyat sec est avantageusement effectuée en continu et de manière contrôlée.

A titre indicatif, dans certains essais réalisés par l'inventeur, le taux d'alimentation du four de pyrolyse 5 en broyat sec est compris entre 4 et 8 kg/heure.

Le procédé se distingue des essais de laboratoires, dans lesquels de très petites masses de produit, de l'ordre de quelques mg à quelques dizaines de grammes sont traités.

Le procédé se distingue des méthodes antérieures connues, dans lesquelles des lots de biomasse sont traités en séquence. L'alimentation contrôlée en broyat sec participe à la stabilité du procédé, lorsque la température de pyrolyse est atteinte dans le dispositif de pyrolyse 5.

Dans certaines mises en œuvre, le contrôle de l'alimentation en broyat sec est assuré par une vanne alvéolaire, ou un sas alvéolaire à gravité. De telles vannes comportent un corps, par exemple en fonte ou en acier inoxydable, une motorisation, et un rotor à pales inclinées définissant des compartiments.

Dans d'autres mises en œuvre, le contrôle de l'alimentation en broyat sec est assuré par un doseur à sole tournante, un doseur à vis, ou bien encore un doseur gravimétrique.

Le dispositif de pyrolyse 5 comprend une enceinte 6, des moyens de convoyage du granulat sec entre une entrée 8 de l'enceinte 6 et une sortie 9 de l'enceinte 6.

L'enceinte est avantageusement maintenue en légère dépression, de l'ordre de 0.1 mbar.

Le taux d'oxygène dans l'enceinte est avantageusement maintenu à faible valeur.

Les moyens de convoyage comprennent une vis montée rotative dans l'enceinte 6.

Le dispositif de pyrolyse 5 comprend des moyens 10 d'entraînement en rotation de la vis, et des moyens de chauffage de la vis, par exemple par effet Joule.

Dans une mise en œuvre avantageuse, la vis a une résistance électrique qui varie le long de son axe de rotation.

En faisant varier la résistance de la vis, la résistance de la vis peut être adaptée en fonction d'un profil de température à engendrer dans l'enceinte 6.

La résistance peut être adaptée de sorte que la température de la vis en sortie de l'enceinte 6 soit plus importante qu'en entrée de l'enceinte 6 lorsqu'aucun produit n'est convoyé, afin que l'écart de température entre le produit et la vis reste sensiblement constant tout le long du séjour du produit dans l'enceinte 6, lorsque le produit est convoyé par la vis.

Dans d'autres mises en œuvre, la résistance de la vis peut être adaptée de sorte que la température de la vis en entrée d'enceinte 6 soit plus importante qu'en sortie d'enceinte 6, lorsqu'aucun produit n'est convoyé.

L'enceinte 6 comporte une enveloppe externe, par exemple métallique, notamment an acier austénitique 316L.

L'enceinte 6 comporte en outre un matériau réfractaire, au moins en partie ciel et en partie sole. Avantageusement, le matériau réfractaire forme une enveloppe interne à l'enceinte 6. Des capteurs de température sont avantageusement placés dans l'enveloppe, en plusieurs emplacements de l'enceinte, depuis son entrée 8 jusqu'à sa sortie 9, permettant la mesure de profils de température suivant la longueur de l'enceinte, et donc suivant l'avancement de la pyrolyse. L'enceinte 6 comporte une cheminée de sortie qui est connectée de façon étanche à l'enceinte 1, permettant de récupérer le biochar. La cheminée de sortie est par exemple connectée à un dispositif de refroidissement 11 du biochar 12.

Les gaz sortent de l'enceinte 1 par un conduit 13 d'alimentation d'un condenseur 14. Le condenseur 14 est relié à un refroidisseur 15, par exemple un refroidisseur à eau. La fraction non condensable des gaz est avantageusement envoyée vers un bruleur 16. La fraction condensée des gaz forme la biohuile 17.

La vis de transport et de chauffe est par exemple en acier inoxydable. Dans certaines mises en œuvre, la vis une forme de serpentin hélicoïdal.

Les moyens d'entraînement en rotation de la vis comportent par exemple un moteur électrique.

Les moyens d'entraînement en rotation de la vis comportent des moyens de contrôle de la vitesse de rotation de l'arbre de sortie du moteur, par exemple un variateur de vitesses.

Les moyens de contrôle permettent ainsi d'adapter la vitesse de rotation de la vis, et de contrôler le temps de séjour du broyat dans l'enceinte 6.

Dans certaines mises en œuvre, le dispositif de pyrolyse 5 comporte des moyens de chauffage par effet Joule de la vis.

Selon un mode de réalisation particulier, les moyens de chauffage comportent des moyens de génération d'un courant électrique et des moyens de raccordement des deux extrémités de la vis aux deux polarités desdits moyens de génération. Des moyens permettent de réguler l'intensité du courant électrique traversant la vis.

Dans une mise en œuvre, les moyens de régulation comportent un gradateur interposé entre les moyens de génération du courant électrique et les moyens de raccordement.

La vis pousse de façon continue les solides vers la sortie de l'enceinte 6.

La vis assure ainsi à la fois un traitement thermique du produit et le convoyage du produit.

Dans certaines mises en œuvre, la vis comporte des spires plates, chaque spire présentant une section rectangulaire, définie par le produit de l'épaisseur de la spire (épaisseur définie suivant l'axe de rotation) par la hauteur de la spire (hauteur définie suivant une direction perpendiculaire à l'axe de rotation).

Le broyage et le séchage peuvent être effectués à l'oliveraie, par l'emploi d'un système léger à brancards ou par l'emploi d'un système de broyage tractable. Le transport de matière est ainsi limité au biochar et aux biohuiles.

En variantes, le broyage et/ou le séchage peuvent être effectués à l'aide d'installation à grande capacité, l'installation étant fixe (et notamment proche de l'huilerie), ou bien encore semi-mobile. L'installation à grande capacité peut ainsi être itinérante et rapprochée de chaque oliveraie ou déplacée d'une région oléicole à une autre.

En variantes, le broyage et/ou le séchage sont effectués par des moyens formant un seul ensemble avec le dispositif de pyrolyse, cet ensemble étant fixe ou semi-mobile.

Dans le mode de réalisation schématisé en figure annexée, une seule enceinte est alimentée par une trémie. En variantes, la trémie peut alimenter plusieurs enceintes fonctionnant en parallèle. Cette disposition permet de tester et comparer rapidement plusieurs conditions de traitement (notamment température, temps, débit d'alimentation).

Avantageusement, l'avancement du traitement de pyrolyse, et notamment les masses de rameaux traités et les masses de rameaux restant à traiter pour chaque dispositif de pyrolyse sont diffusés aux utilisateurs, par exemple par une application sur téléphone mobile.

Chaque utilisateur travaillant à la taille dans une oliveraie peut ainsi savoir si un dispositif de pyrolyse est disponible à proximité ou va être disponible à proximité.

Des résultats d'essais effectués avec un dispositif de pyrolyse du type schématisé en figure annexée vont maintenant être présentés.

### Essais

Les conditions des essais sont présentées dans le tableau 1.

**Tableau 1- Conditions des essais**

| | Essai 1 | Essai 2 | Essai 3 | Essai 4 |
|---|---|---|---|---|
| Température (°C) | 500 | 500 | 400 | 600 |
| Temps de traitement (minutes) | 10 | 15 | 10 | 10 |
| Masse de produit traité (kg) | 14 | 15 | 16 | 14 |
| Taux d'alimentation (kg/h) | 6.22 | 4.22 | 7.06 | 7.64 |

Dans ces essais, la vis a un diamètre de l'ordre de 130 mm.

L'enceinte 6 est placée sous une dépression de l'ordre de 0.1 mbar. Avant chaque essai, l'ensemble de l'installation de pyrolyse est inerté à l'azote.

La durée des essais est comprise entre 135 minutes et 213 minutes. 120 kg de rameaux d'olivier provenant de la Sierra Margina en Espagne ont été traités.

Le gaz formé lors de la pyrolyse est extrait par dépression et est refroidi par un condenseur à double paroi utilisant de l'eau glycolée à 5°C comme fluide frigorigène.

La biohuile est récupérée à l'aide d'un siphon.

Le biochar est transporté par la vis et est récupéré en partie extrême de la vis par une vanne alvéolaire. Le biochar est envoyé vers un refroidisseur et est stocké dans un contenant hermétique sous atmosphère neutre.

Le gaz non condensable est envoyé vers un oxydeur thermique permettant sa combustion et sa valorisation thermique.

La température de pyrolyse est contrôlée par une sonde placée en fin de vis. La quantité de gaz produite est calculée en tenant compte des rendements en biochar et biohuile. L'analyse du gaz est effectuée en continu à l'aide d'un analyseur à conductibilité thermique GEIT GAS 3100 T. Le gaz est prélevé en partie haute d'un condenseur pour entrer dans un dispositif de traitement comprenant un bain d'isopropanol, des billes de verre et d'ouate de cellulose. Ce traitement assure un séchage et une épuration des gaz, avant leu envoi à l'analyseur.

Les rendements massiques obtenus sont présenté dans le tableau 2.

**Tableau 2- Rendements massiques en biohuile, biochar et biogaz**

| | Essai 1 | Essai 2 | Essai 3 | Essai 4 |
|---|---|---|---|---|
| Masse de biochar (kg) | 3.7 | 2.75 | 4.75 | 2.25 |
| Masse de biohuile (kg) | 5.2 | 6.2 | 5.55 | 5.65 |
| Rendement massique en biochar (%) | 26.43 | 18.20 | 29.69 | 16.07 |
| Rendement massique en biohuile (%) | 37.14 | 41.33 | 34.69 | 40.36 |
| Rendement massique en biogaz (%) | 36.43 | 40.47 | 35.63 | 43.57 |

Les compositions et le PCI des gaz produits sont données dans le tableau 3.

**Tableau 3- Composition et PCI des gaz produits**

| | Essai 1 | Essai 2 | Essai 3 | Essai 4 |
|---|---|---|---|---|
| CO (%) | 23.58 | 11.67 | 8.79 | 26.8 |
| CO₂ (%) | 16.75 | 18.44 | 13.81 | 14.04 |
| CH₄ (%) | 7.87 | 7.02 | 2.73 | 9.50 |
| CₙHₘ (%) | 2.50 | 3.47 | 1.93 | 2.94 |
| H₂ (%) | 3.37 | 1.86 | 0.11 | 3.12 |
| O₂ (%) | 0.10 | 0.18 | 0.29 | 0.01 |
| PCI (MJ/m³) | 7.77 | 6.42 | 3.34 | 9.02 |

La présente invention permet le fractionnement de la biohuile avec obtention d'une phase goudronneuse et d'une phase aqueuse, la phase goudronneuse étant riche en phénol, naphtalène et leurs dérivés, la phase aqueuse étant riche en acide acétique, en acétol, en formaldéhyde, en furfural et en 2,3 butanedione.

Le tableau 4 présente les principaux pics observés en chromatographie (GCMS) pour la phase aqueuse de la biohuile obtenue lors de l'essai 3 (température de pyrolyse 400°C, temps de séjour dans l'enceinte 10 minutes).

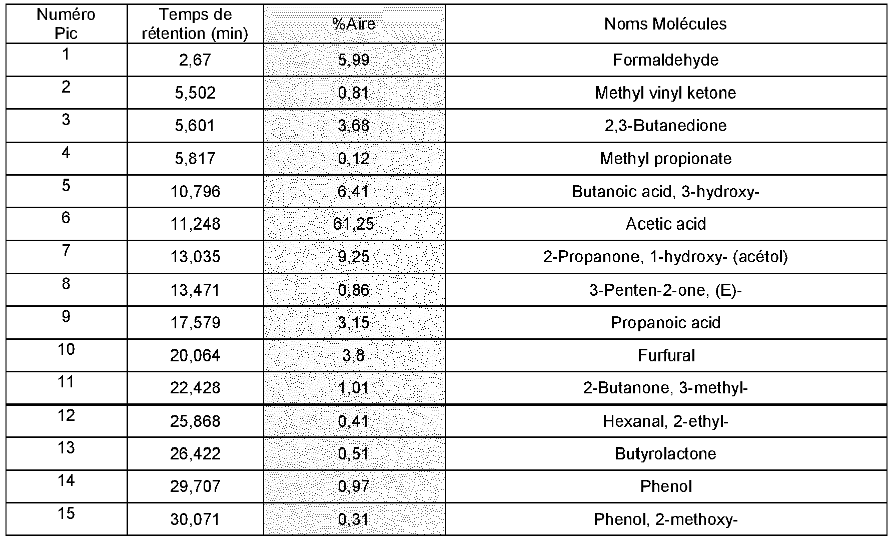

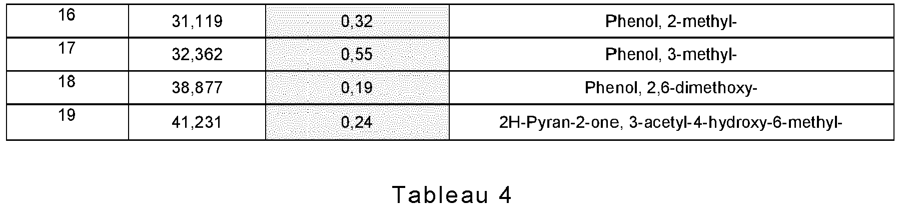

Le tableau 5 présente les principaux pics observés en chromatographie (GCMS) pour la phase aqueuse de la biohuile obtenue lors de l'essai 1, (température de pyrolyse 500°C, temps de séjour dans l'enceinte 10 minutes).

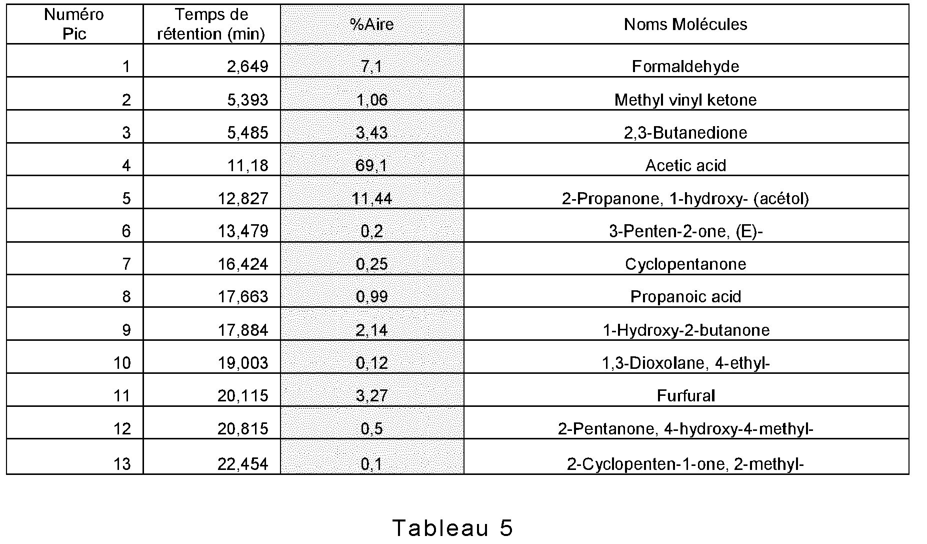

Le tableau 6 présente les principaux pics observés en chromatographie (GCMS) pour la phase aqueuse de la biohuile obtenue lors de l'essai 2,(température de pyrolyse 500°C, temps de séjour dans l'enceinte 15 minutes).

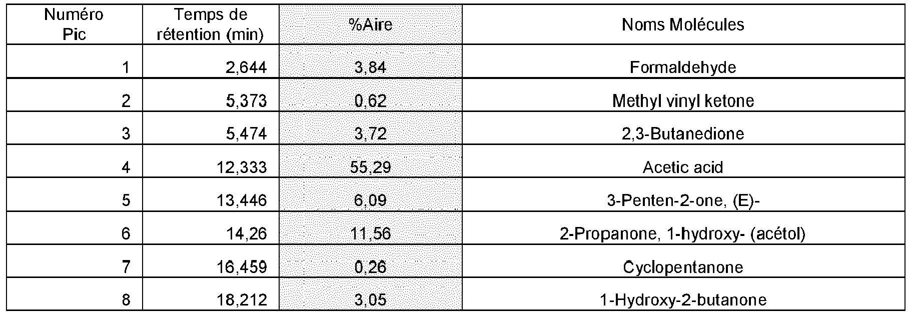

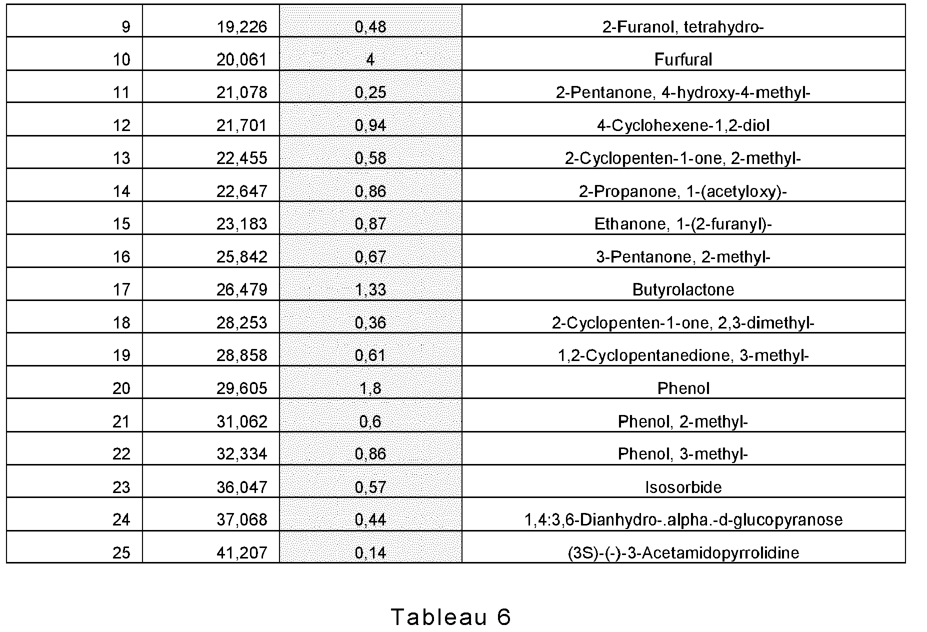

Le tableau 7 présente les principaux pics observés en chromatographie (GCMS) pour la phase aqueuse de la biohuile obtenue lors de l'essai 4, (température de pyrolyse 600°C, temps de séjour dans l'enceinte 10 minutes).

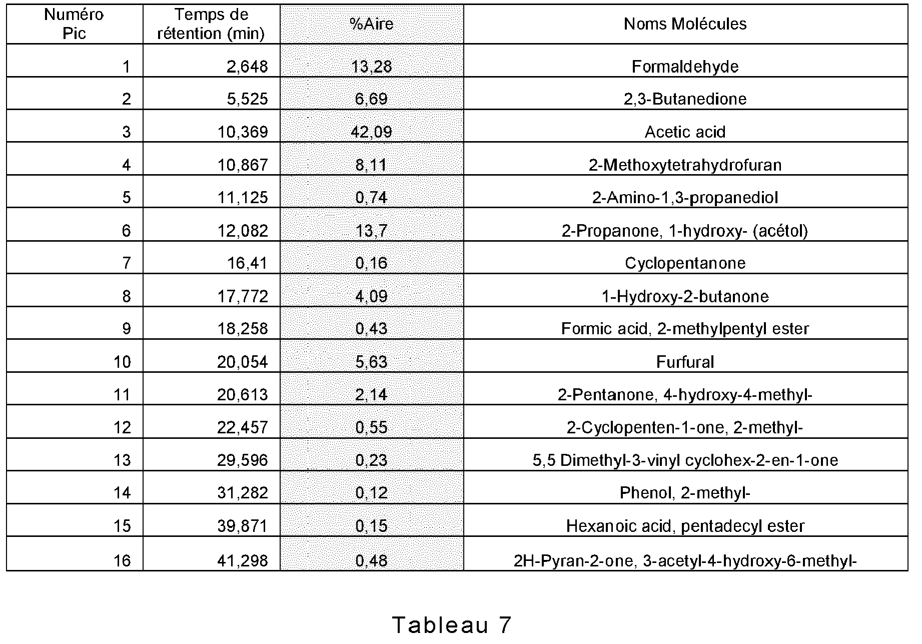

Le tableau 8 présente les principaux pics observés en chromatographie (GCMS) pour la phase goudronneuse de la biohuile obtenue lors de l'essai 2, (température de pyrolyse 500°C, temps de séjour dans l'enceinte 15 minutes).

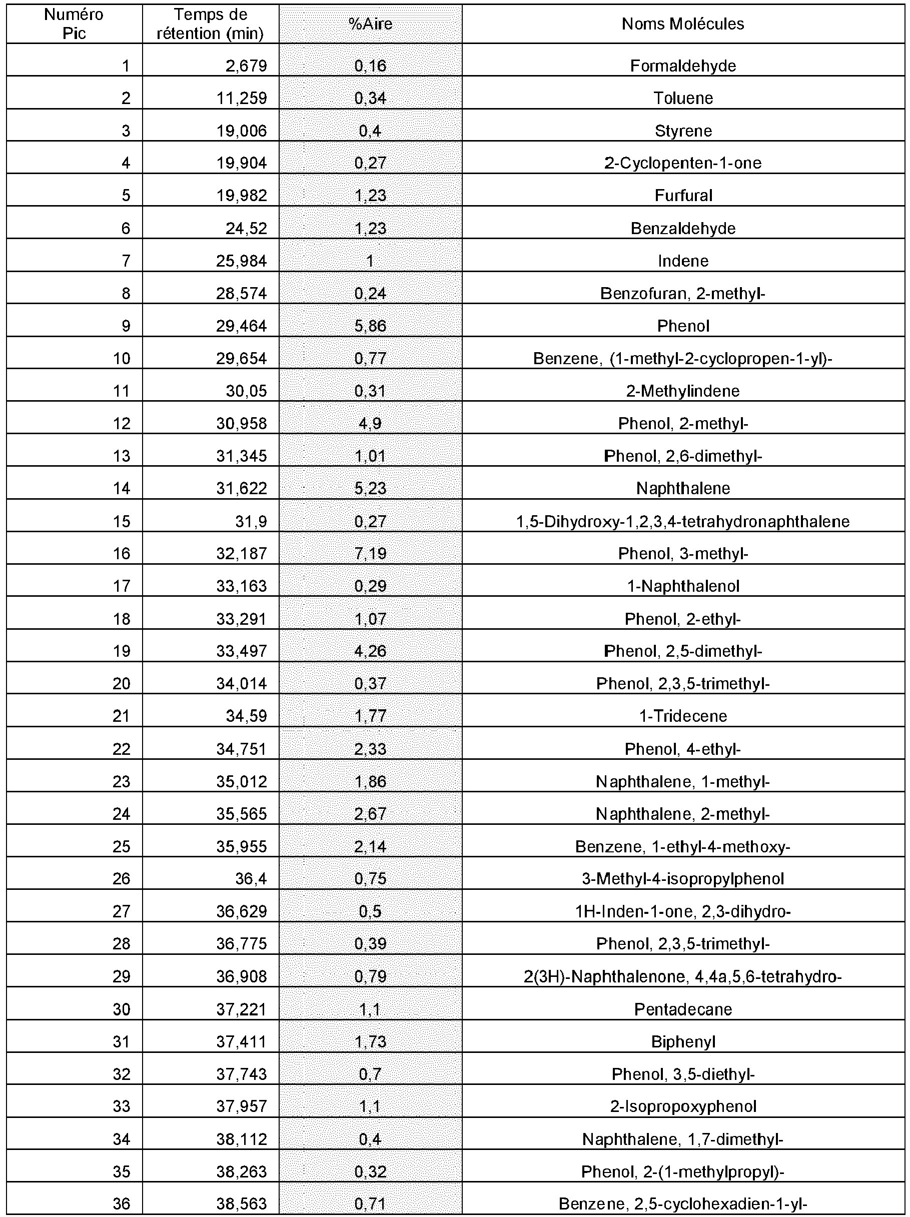

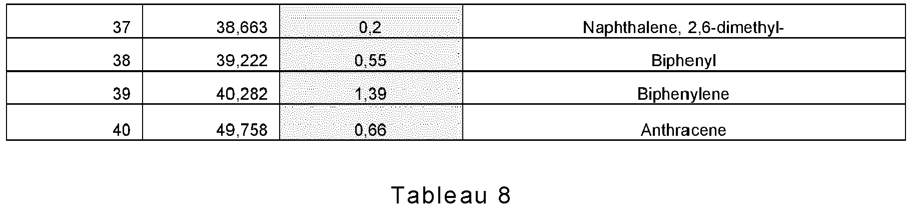

L'invention présente de nombreux avantages en termes de valorisation de la biomasse formée par les rameaux et résidus de taille d'oliviers, biomasse actuellement massivement brûlée en place.

L'acétol (hydroxyacétone, 1-hydroxy-2-propanone, CAS 116-09-6) obtenu dans la phase aqueuse peut être utilisé comme agent brunissant dans l'industrie agroalimentaire, ou l'industrie textile, ou comme arôme par exemple en boulangerie, ou bien encore comme agent autobronzant en cosmétique.

L'acétol peut également être utilisé comme intermédiaire chimique, par exemple pour la production de propylène glycol.

La phase goudronneuse peut être valorisée dans la production de polymères biosourcés (résines, mousses, polyuréthane, remplacement du bisphénol A pour la fabrication d'époxy).

Les phénoliques contenus dans la phase goudronneuse peuvent être avantageusement employés comme précurseurs de polymérisation.

En variante ou en combinaison, au moins une partie de la phase goudronneuse est valorisée pour la production d'énergie.

En variante ou en combinaison, au moins une partie de la biohuile est valorisée comme matière première à l'élaboration de biocarburant.

Le biochar obtenu par le procédé peut avantageusement être employé pour l'amendement des sols, ou être activé, par exemple par plasma, pour effectuer des absorptions, utilisé pour une dépollution, une séparation de gaz, ou en catalyse.

Le biochar pourrait en variante être au moins en partie combiné avec des biopolymères pour former des fertilisants à relargage contrôlé.

En variante, au moins une partie du biochar peut être valorisé comme substitut au noir de carbone.

La phase gazeuse non condensable obtenue par le procédé peut avantageusement être valorisée par combustion, les fumées chaudes obtenues lors de cette combustion étant introduites dans un circuit d'échangeur ou dans un procédé de valorisation thermique après épuration, par exemple dans une turbine à gaz.

L'invention présente de nombreux avantages en termes de respect de la nature.

La séparation en une phase aqueuse et une phase goudronneuse est avantageusement obtenue sans solvant.

Le broyage des rameaux peut être effectué en utilisant la biohuile comme carburant ou en utilisant un carburant issu de la biohuile. Le séchage du broyat peut être effectué au soleil ou à l'aide de moyens de séchage alimentés en énergie par le soleil ou la biohuile comme carburant ou un biocarburant issu de la biohuile. La biomasse formée chaque année par les résidus de taille est ainsi valorisée dans un fonctionnement autonome de l'exploitation oléicole.

Les résultats ont été obtenus à l'échelle pilote et sont ainsi potentiellement extrapolables à l'échelle industrielle.

## Revendications

1. Procédé de production de bio-huile par pyrolyse de rameaux d'olivier, le procédé comprenant les étapes suivantes :
- broyage des rameaux d'olivier pour former un broyat ;
- séchage du broyat pour former un broyat sec ;
- introduction du broyat sec dans un four de pyrolyse ;
- chauffage du broyat sec à une température comprise entre 400°C et 600° pendant une durée comprise entre 10 minutes et 15 minutes, dans un réacteur sensiblement hermétique, le broyat sec étant entraîné en continu dans le réacteur par une vis de transfert et de chauffe, la vis étant rotative suivant un axe de rotation longitudinal, et chauffée;
- extraction du gaz et refroidissement du gaz par condensation, pour former une biohuile ;
- stockage de la biohuile à une température de l'ordre de quelques degrés Celsius, la biohuile se fractionnant en une phase goudronneuse et une phase aqueuse ;
- séparation de la phase aqueuse.

2. Procédé selon la revendication 1, **caractérisé en ce que** la phase goudronneuse comprend notamment du phénol, du naphtalène et leurs dérivés, la phase aqueuse comprenant notamment de l'acide acétique, de l'acétol, du formaldéhyde, du furfural, du 2,3-butanedione.

3. Procédé selon l'une des revendications 1 à 2, **caractérisé en ce que** le broyage des rameaux est réalisé pour former un broyat de granulométrie inférieure à 20 mm.

4. Procédé selon l'une des revendications 1 à 3, **caractérisé en ce que** le séchage du broyat est effectué pour former un broyat sec, présentant une humidité relative inférieure à 20 %.

5. Procédé selon l'une quelconque des revendications 1 à 4, **caractérisé en ce que** l'introduction du broyat sec dans le four de pyrolyse est effectuée à débit constant et régulé.

6. Procédé selon l'une quelconque des revendications 1 à 5, **caractérisé en ce que** l'introduction du broyat sec dans le four de pyrolyse est effectuée avec un taux d'alimentation en broyat sec supérieur à 4 kg par heure.

7. Procédé selon l'une quelconque des revendications 1 à 6, **caractérisé en ce qu'**il comprend une étape d'extraction de 1-hydroxy-2-propanone de la phase aqueuse de biohuile.

8. Procédé selon l'une quelconque des revendications 1 à 7 ; **caractérisé en ce que** l'étape de chauffage du broyat sec est réalisée à
- une température de 400°C pendant une durée de 10 minutes ou
- une température de 500°C pendant une durée de 10 minutes.

9. Procédé selon l'une quelconque des revendications 1 à 7, **caractérisé en ce que** l'étape de chauffage du broyat sec est réalisée à
- une température de 500°C pendant une durée de 15 minutes ou
- une température de 600°C pendant une durée de 10 minutes.

10. Procédé selon l'une quelconque des revendications 1 à 9, **caractérisé en ce que** la vis présente une température contrôlée le long de son axe de rotation.

11. Biohuile issue du procédé selon l'une quelconque des revendications 1 à 10, dans laquelle la phase goudronneuse comprend notamment du phénol, du naphtalène, et leurs dérivés, la phase aqueuse comprenant notamment de l'acide acétique, de l'acétol, du formaldéhyde, du furfural, du 2,3 butanedione.

12. Dispositif de production de bio-huile par pyrolyse de rameaux d'olivier, le dispositif comprenant :
- des moyens de broyage des rameaux, pour former un broyat ;
- des moyens de séchage du broyât, pour former un broyat sec ;
- des moyens d'introduction du broyat sec, dans un four de pyrolyse ;
- un réacteur et des moyens de chauffage du broyat sec à une température comprise entre 400°C et 600° pendant une durée comprise entre 10 minutes et 15 minutes, dans un réacteur sensiblement hermétique, le broyat sec étant entraîné en continu dans le réacteur par une vis de transfert et de chauffe, la vis étant rotative suivant un axe de rotation longitudinal, et chauffée ;
- des moyens d'extraction du gaz et refroidissement du gaz par condensation, pour former une biohuile ;
- des moyens de stockage de la biohuile à une température de l'ordre de quelques degrés Celsius, la biohuile se fractionnant en deux phases : une phase goudronneuse et une phase aqueuse ;
- des moyens de séparation de la phase aqueuse.

13. Dispositif selon la revendication 12, **caractérisé en ce que** la phase goudronneuse comprend notamment du phénol, du naphtalène, et leurs dérivés, la phase aqueuse comprenant notamment de l'acide acétique, de l'acétol, du formaldéhyde, du furfural, du 2,3 butanedione.

14. Dispositif selon l'une des revendications 12 ou 13, **caractérisé en ce que** les moyens de séchage du broyat sont alimentés en énergie par biohuile, ou par un carburant issu de biohuile, ou par la chaleur produite lors de la combustion de gaz produits lors de la pyrolyse.

15. Dispositif selon l'une des revendications 12 à 14, **caractérisé en ce que** l'axe de la vis présente une température contrôlée le long le son axe de rotation.
